(19) **Europäisches Patentamt**

**European Patent Office**

**Office européen des brevets**

(11) **EP 1 063 871 A1**

(12) **EUROPEAN PATENT APPLICATION**

(43) Date of publication:
**27.12.2000 Bulletin 2000/52**

(51) Int Cl.⁷: **H05H 1/12**, G21B 1/00

(21) Application number: **99830397.8**

(22) Date of filing: **24.06.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **EUROPEAN COMMUNITY**<br>**2920 Luxembourg (LU)**<br><br>(72) Inventors:<br>• **Matera, Roberto**<br>**Varese (IT)** | • **Boscary, Jean**<br>**Toulouse (FR)**<br>• **Cazzola, Carlo**<br>**Cadegliano (IT)**<br><br>(74) Representative: **Jorio, Paolo et al**<br>**STUDIO TORTA S.r.l.,**<br>**Via Viotti, 9**<br>**10121 Torino (IT)** |

(54) **Divertorfiltering element for a tokamak nuclear fusion reactor, divertor employing the filtering element and tokamak nuclear fusion reactor employing the divertor**

(57) A divertor for a TOKAMAK nuclear fusion reactor, having at least one target element (44, 49, 66) for intercepting the path (G) of contaminating particles from a toroidal channel (33) in which plasma is formed and confined (13, 15, 17); and at least one grille structure (60, 70) interposed between a catch region (ZR, 54, 56), for catching the contaminating particles, and the input of a plasma purifying device (79). The grille structure (60, 70) is fitted with a layered structure of threadlike felt material (90) facing the catch region (54, 56) and through which flows a mixture of deuterium, tritium, helium and impurities flowing through the grille structure (60, 70).

Fig.3

Fig.6

**Description**

The present invention relates to a divertor filtering element for a TOKAMAK nuclear fusion reactor; a divertor employing the filtering element: and a TOKAMAK nuclear fusion reactor employing the divertor.

TOKAMAK experimental nuclear fusion devices are known to define a toroidal channel in which is formed and confined - by means of a magnetic control system mainly employing toroidal and poloidal magnets - a gaseous plasma comprising at least two component elements (in particular, deuterium and tritium) which, in particular temperature and pressure conditions inside the device, overcome Coulomb forces of repulsion and fuse to form a heavier element (helium) in a nuclear fusion reaction in which energy is released.

The plasma is also known to contain contaminating particles, e.g. hydrogen, oxygen, metal ions (tungsten, beryllium, vanadium, iron, etc.), produced by interaction of the plasma and the metal walls of the toroidal channel, and which impair the chemical-physical characteristics of the plasma and must therefore be removed from the deuterium-tritium mixture.

To remove the contaminating particles and so purify the deuterium-tritium mixture, nuclear fusion reactors normally comprise a device known as a divertor.

The divertor communicates with the toroidal channel in which the plasma is confined, and comprises at least one target element for intercepting the path of the contaminating particles from the toroidal channel; and a catch device in turn comprising a filtering element interposed between a contaminating particle catch region and the inlet of means for aspirating and purifying the deuterium-tritium-contaminating particle mixture.

The target element must be made of highly resistant material capable of withstanding bombardment by high-energy particles from the toroidal channel, which high-energy particles cause sublimation and sputtering of a small portion of the material of which the target element is made.

If the target element is made of carbon or a carbon compound, carbon atoms sputter and deposit on various parts of the divertor, particularly the filtering element of the catch device. Which poses a further problem : that of the carbon, as it deposits, trapping and so withdrawing tritium atoms from the nuclear fusion process. Tritium absorption by carbon is particularly noticeable at divertor operating temperatures below 500°C.

The problem is further compounded by tritium being an extremely rare natural element, and therefore one which on no account should be withdrawn from the fusion process and rendered unusable. What is more, carbon-absorbed tritium deposits further impair the safety of the device.

It is an object of the present invention to provide a divertor filtering element for a nuclear fusion reactor, designed to eliminate the drawbacks of known divertors by ensuring the carbon deposited in the filtering element absorbs substantially no tritium.

It is a further object of the present invention to provide a divertor designed to eliminate the drawbacks of known divertors by ensuring the carbon deposited in the divertor absorbs substantially no tritium.

It is a further object of the present invention to provide a TOKAMAK nuclear fusion reactor designed to eliminate the drawbacks of known experimental devices.

According to the present invention, there is provided a divertor filtering element, a divertor, and a TOKAMAK nuclear fusion reactor as described respectively in Claims 1, 12 and 23.

A preferred, non-limiting embodiment of the invention will be described by way of example with reference to the accompanying drawings, in which:

> Figure 1 shows a partial view in perspective of a nuclear fusion reactor in accordance with the teachings of the present invention;
> Figure 2 shows a larger-scale view in perspective of a component element of the vessel of the Figure 1 reactor;
> Figure 3 shows a cross section of a portion of the Figure 1 reactor;
> Figure 4 shows a view in perspective of the various components of the divertor according to the teachings of the present invention;
> Figure 5 shows a larger-scale view in perspective of a filtering element in accordance with the teachings of the present invention;
> Figure 6 shows a longitudinal section of the Figure 4 divertor;
> Figure 7 shows a much larger-scale view of a detail of the Figure 5 filtering element;
> Figure 8 shows a partial view in perspective of a variation of the Figure 7 detail.

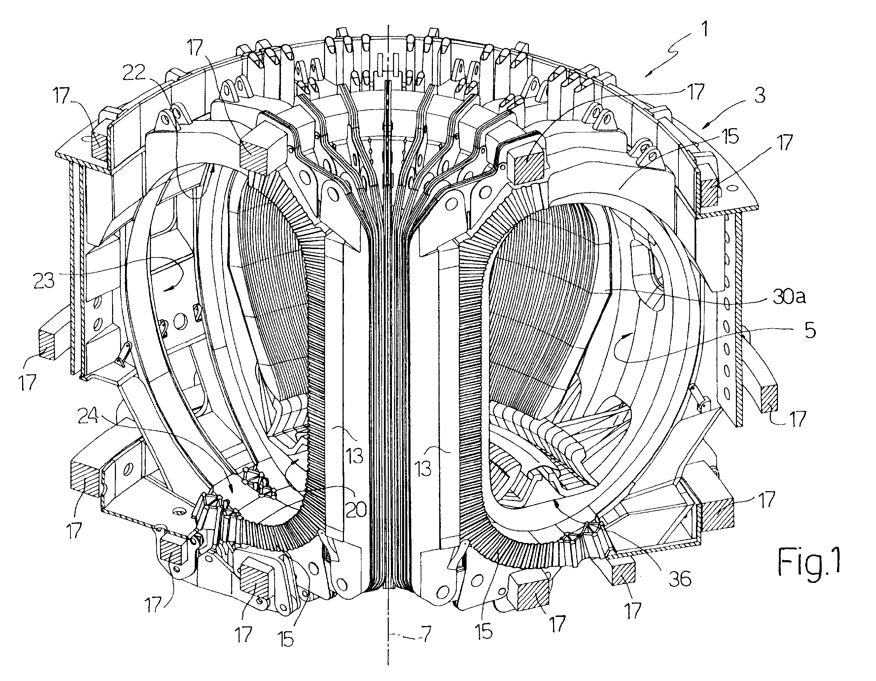

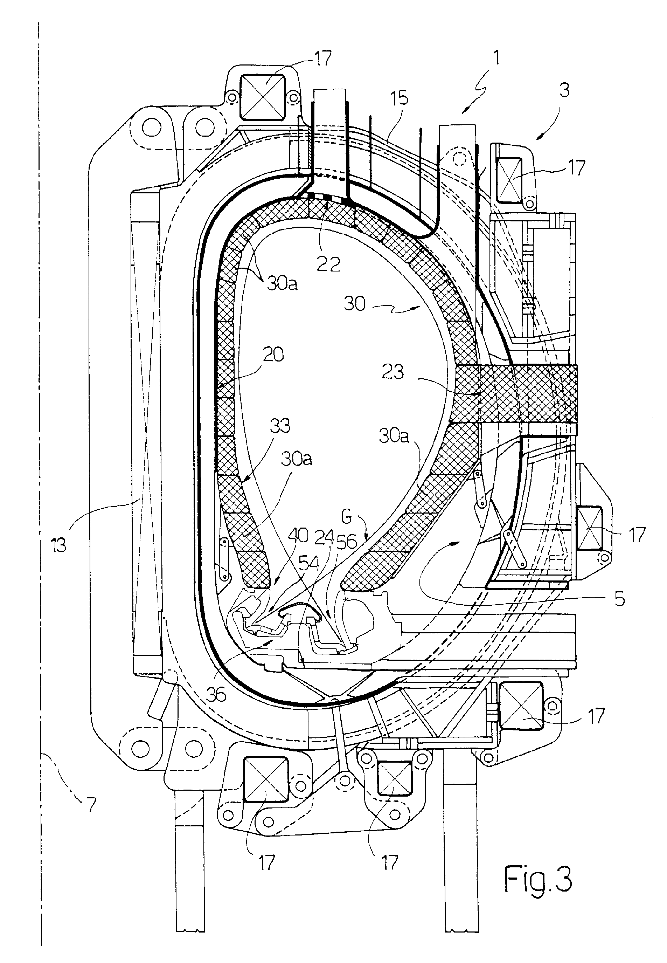

Number 1 in Figures 1 and 3 indicates as a whole a TOKAMAK nuclear fusion reactor comprising a supporting structure 3 defining, among other things, a toroidal channel 5 extending about a vertical axis of symmetry 7.

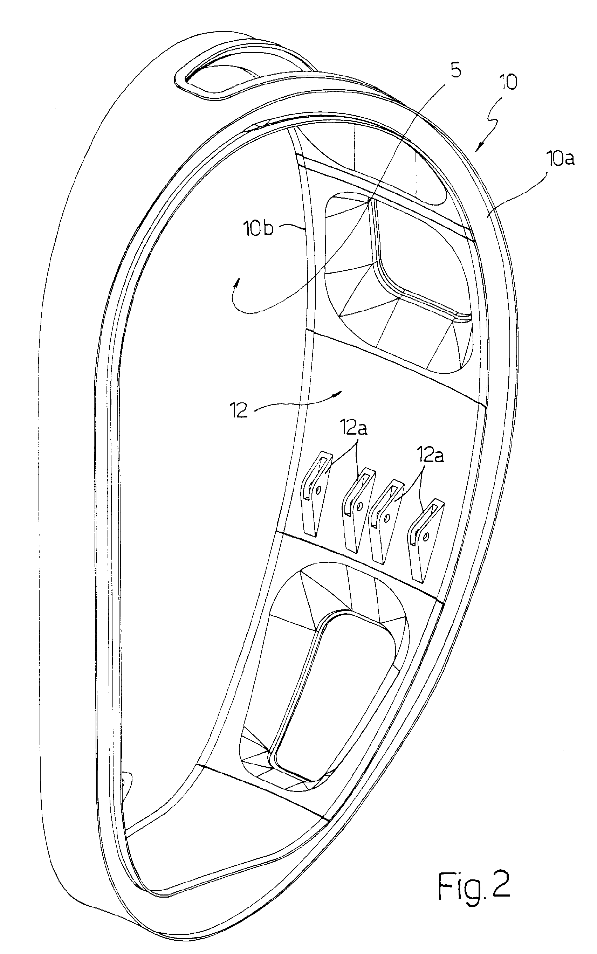

Toroidal channel 5 is defined by a number of tubular portions 10 connected continuously to one another and each comprising end portions 10a, 10b (Figure 2) stably connected to end portions of adjacent tubular portions 10 to form an annular tubular element internally defining toroidal channel 5. Each tubular portion 10 is defined internally by a metal wall 12 defining an angular portion of toroidal channel 5; and metal wall 12 comprises anchoring and supporting elements 12a for other parts of reactor 1.

Toroidal channel 5 is connected to a suction device, e.g. a vacuum pump (not shown) , for creating a vacuum in toroidal channel 5, and comprises means (not shown) for feeding nuclear fusion reaction fuel elements (e.g. deuterium and tritium) into channel 5.

As is known, the nuclear fusion reaction takes place inside a restricted portion of toroidal channel 5, in which plasma is created and confined. The plasma is maintained at extremely high temperatures so that the nuclei of light elements (deuterium and tritium in the above example) fuse to form a heavier element (helium) and release an enormous amount of energy.

In fact, though various nuclear fusion reactions are theoretically possible, the one supplying most energy within a technically feasible temperature range is that between deuterium and tritium, which is also particularly advantageous in view of the fact that deuterium is available naturally in large supply (seawater contains large amounts), and tritium (only small amounts of which are to be found in nature) may be produced directly, in the nuclear fusion reactor, by the nuclear reaction caused by the neutrons produced during fusion interacting with lithium.

The main reactions in fact are:
fusion reaction:

$$D + T => He^4\ (3.5\ MeV) + n(14.1\ MeV) \qquad (1)$$

tritium production:

$$Li^6 + n => He^4(2.1\ MeV) + T(2.7\ MeV) \qquad (2)$$

Therefore, though the reaction only takes place between deuterium and tritium, the elements consumed are deuterium and lithium, both of which are found naturally in large quantities.

Supporting structure 3 comprises a cooling system (not shown) defined by a number of conduits (not shown) extending inside the various portions 10 of supporting structure 3 and conveying a work fluid (in particular, pressurized water) which is heated by the heat generated inside toroidal channel 5 by the above nuclear fusion reaction. On the nuclear fusion reactor reaching a positive yield, the high-temperature work fluid may be used to produce energy, e.g. for supplying a turbine (not shown) connected to an electric generator (not shown).

Reactor 1 also comprises a central solenoid 13 coaxial with axis 7 and surrounded by the annular tubular element internally defining toroidal channel 5. Central solenoid 13 is supplied with a pulsating current to generate a pulsating electromagnetic field and magnetically couple solenoid 13 itself (which acts as a transformer primary) and a solenoid (secondary) defined by the plasma in toroidal channel 5. A pulsating current induced by the pulsating magnetic field generated by central solenoid 13 therefore flows in the plasma; and the Joule effect of the pulsating current induced in the plasma heats the plasma to the high temperatures required to initiate the nuclear fusion process.

Means (not shown) may also be provided to heat the plasma further, e.g. by electromagnetic radiation and/or neutral injection (neutrals are uncharged particles of deuterium or tritium fed into the plasma to heat it).

Reactor 1 also comprises a number of electromagnets for confining the plasma inside toroidal channel 5, and which mainly comprise toroidal electromagnets 15 carried by supporting structure 3, surrounding tubular portions 10, and for producing a toroidal magnetic field about axis of symmetry 7. Toroidal electromagnets 15 are preferably, but not exclusively, made of superconducting materials.

The above toroidal field and the magnetic field generated by the pulsating current induced in the plasma by solenoid 13 combine to produce a helical magnetic field which confines the plasma within a limited region and keeps it well away from the walls of toroidal channel 5.

Reactor 1 also comprises a number of poloidal electromagnets 17 (six in the example shown) carried by supporting structure 3, outside toroidal channel 5, and for generating magnetic fields to square and stabilize the plasma.

More specifically, toroidal channel 5 (Figure 3) has a substantially oval-shaped section defined by:

- a substantially vertical first lateral wall 20 adjacent to central solenoid 13;
- a curved C-shaped top wall 22 with the concavity facing downwards;
- a curved C-shaped second lateral wall 23 facing wall 20; and
- a curved C-shaped bottom wall 24 with the concavity facing upwards.

Toroidal channel 5 is lined with a shielding blanket 30 in turn defining, inside toroidal channel 5, a toroidal cavity 33 (Figure 3) for containing the plasma, which, confined magnetically as described above, does not contact the outer surfaces of shielding blanket 30.

Shielding blanket 30 comprises a number of shielding portions 30a lining the walls internally defining toroidal channel 5.

Shielding portions 30a may be provided internally with gaps (not shown) for containing lithium which, when struck by the neutrons (n) produced during the nuclear fusion reaction close by, is converted into tritium according to nuclear reaction (2) indicated above.

Toroidal channel 5 also houses a divertor 36 located on bottom wall 24 in a region communicating with cavity 33 via an annular opening 40 defined by bottom-end edges of shielding portions 30a.

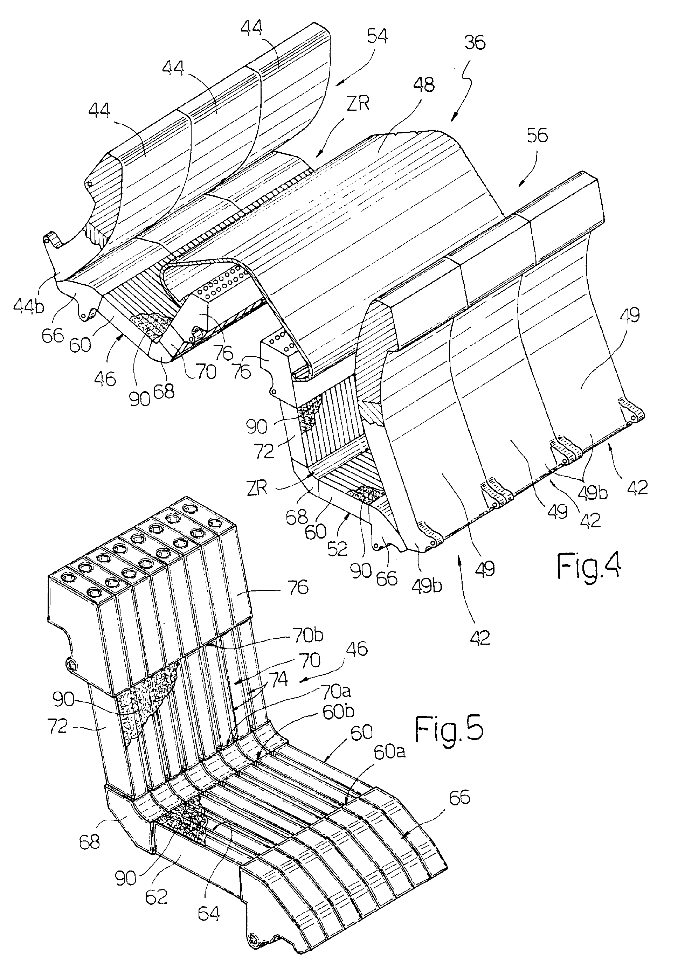

Divertor 36 (Figure 4) comprises an annular structure symmetrical about axis 7 and defined by a number of adjacent modules 42 in different consecutive angular positions.

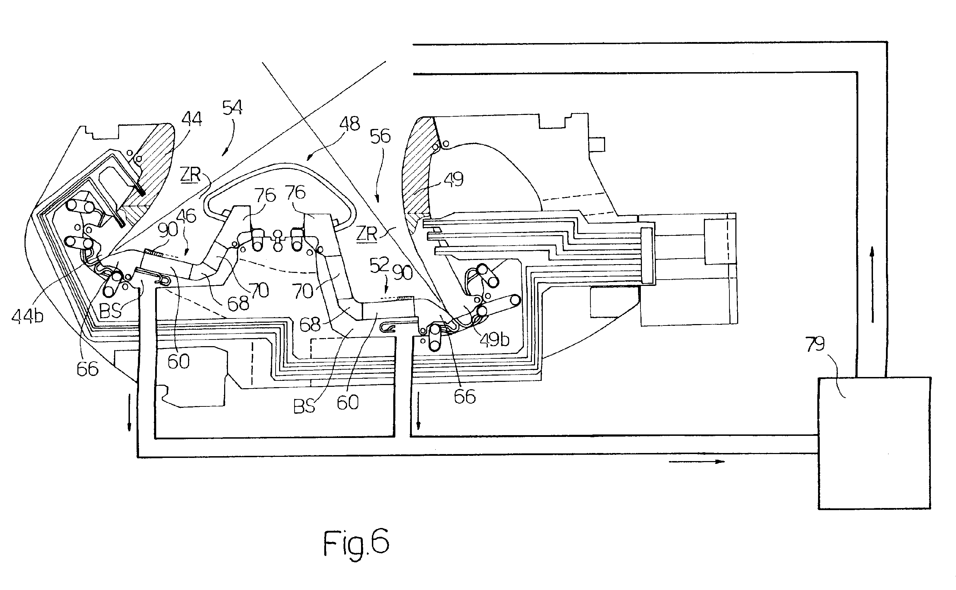

Each module 42 comprises (Figures 4 and 6):

- a curved first wall 44 having a substantially C-shaped cross section and made of extremely heat-resistant material, in particular, tungsten at the top and a carbon-based composite material at the bottom;
- a first filtering element (gas box liner) 46 having a substantially L-shaped section and extending between a bottom portion 44b of curved wall 44 and a raised hood-shaped intermediate element 48 of divertor 36;
- a second curved wall 49 located on the opposite side of intermediate element 48 to wall 44, having a substantially C-shaped cross section, and, like wall 44, made of extremely heat-resistant material: tungsten at the top and a carbon-based composite material at the bottom; and
- a second filtering element 52 having a substantially L-shaped section and extending between a bottom portion 49b of curved wall 49 and hood-shaped intermediate element 48.

By "extremely heat-resistant" is meant the ability of a material to safely withstand the cyclic heat flow produced during nuclear fusion (about ten million watts per square meter).

Divertor 36 (see also Figure 3) therefore defines an inner first annular channel 54 coaxial with axis 7 and defined by curved walls 44 and filtering elements 46 of modules 42; and an outer second annular channel 56 coaxial with axis 7, separated from channel 54 by hood-shaped intermediate element 48, and defined by curved walls 49 and filtering elements 52 of modules 42.

As a result of the particular magnet arrangement described above, the flow lines of the surface portion of plasma do not join up (Figure 3) but form an "open-8" path G which intersects the bottom walls of first annular channel 54 and second annular channel 56. Any contaminating particles (oxygen, hydrogen, metal ions) in the plasma are located on the surface portion of the plasma and, as a result of the flow-line arrangement described above, are conveyed towards the first and into the second channel 54, 56, which form an end-of-travel catch region ZR for the particles, which mainly strike the portions made of carbon or carbon-based composite material.

Impact of the contaminating particles on the surfaces comprising carbon causes sputtering and sublimation of carbon particles (atoms or groups of atoms) and the formation of a mixture of impurities comprising oxygen, hydrogen, metal ions and carbon.

More specifically, each filtering element 46 comprises (Figure 5):

- a first flat grille portion 60 defined by a number of straight lamellar elements 62 arranged parallel and equally spaced to define a number of parallel elongated rectangular slits 64;
- a base portion 66 made of carbon and extending from a first end 60a of the grille portion - which base portion 66 contacts bottom portion 44b of curved wall 44, and also provides for arresting impurities striking portion 66 itself;
- a C-shaped elbow portion 68 connected to a second end 60b of grille portion 60; and
- a second flat grille portion 70 defined by a number of straight lamellar elements 72 arranged parallel and equally spaced to define a number of parallel elongated rectangular slits 74 - the second flat grille portion 70 having a first end portion 70a connected to elbow portion 68, and a second end portion 70b connected to an end element 76 which fits onto hood-shaped element 48. The second flat grille portion 70 forms an angle of just over 90° with first flat grille portion 60.

Second filtering element 52 has the same structure as filtering element 46 and is therefore not described in detail for the sake of brevity, and the corresponding parts are indicated in the drawings using the same reference numbers. In the case of filtering element 52, however, base portion 66 is positioned contacting bottom portion 49b of curved wall 49.

Gas box liners 46 and 52 separate the respective catch regions ZR (adjacent to toroidal cavity 33 containing the plasma) from a rear region BS located behind the filtering elements and connected to the input of an exhaust gas purifying device 79 (shown schematically in Figure 6) for aspirating the mixture of deuterium, tritium, helium and impurities, removing the impurities from the mixture, and feeding the purified deuterium-tritium mixture back into toroidal channel 5.

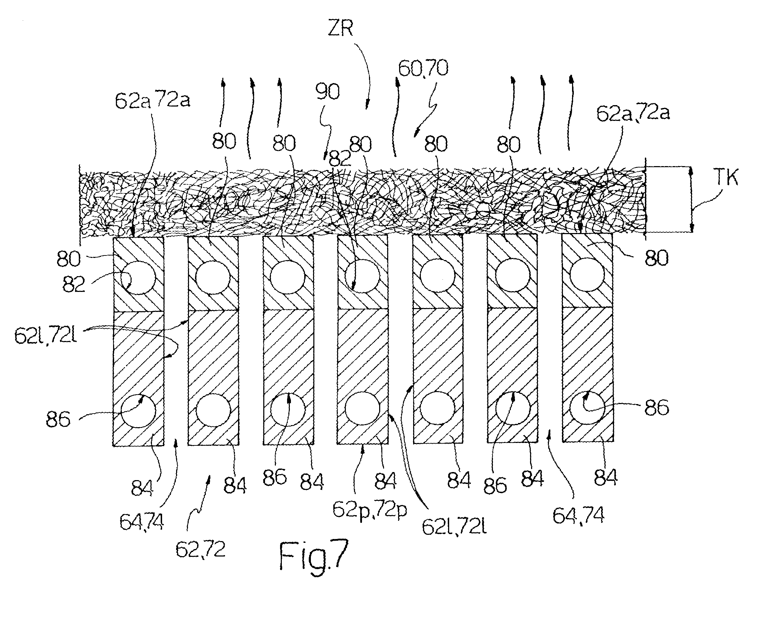

Lamellar elements 62, 72 (Figure 7) have a rectangular section and are defined by rectangular front faces 62a, 72a facing catch region ZR, by lateral faces 621, 721 defining, on opposite sides, slits 64, 74, and by rectangular rear faces 62p, 72p.

Each lamellar element 62, 72 comprises:

- a first portion 80 made of copper, defining front face 62a, 72a, and having a cooling system defined by inner channels 82 for the passage of a conveyed cooling fluid; and
- and a second portion 84 made of steel, defining rear face 62p, 72p, and having a cooling system defined by inner channels 86 for the passage of a conveyed cooling fluid.

The first and second flat grille portions 60, 70 are each covered with a layered structure 90 of refractory threadlike metal material resistant to high temperatures (i.e. over 3000°C), and which, in a preferred non-limiting embodiment, comprises an anisotropic layered structure, such as felt, defined by compressed twisted tungsten threads.

Layered structure 90 is connected firmly, e.g. brazed, to rectangular front faces 62a, 72a, and is of substantially constant thickness TK (measured perpendicular to the plane of rectangular front faces 62a, 72a).

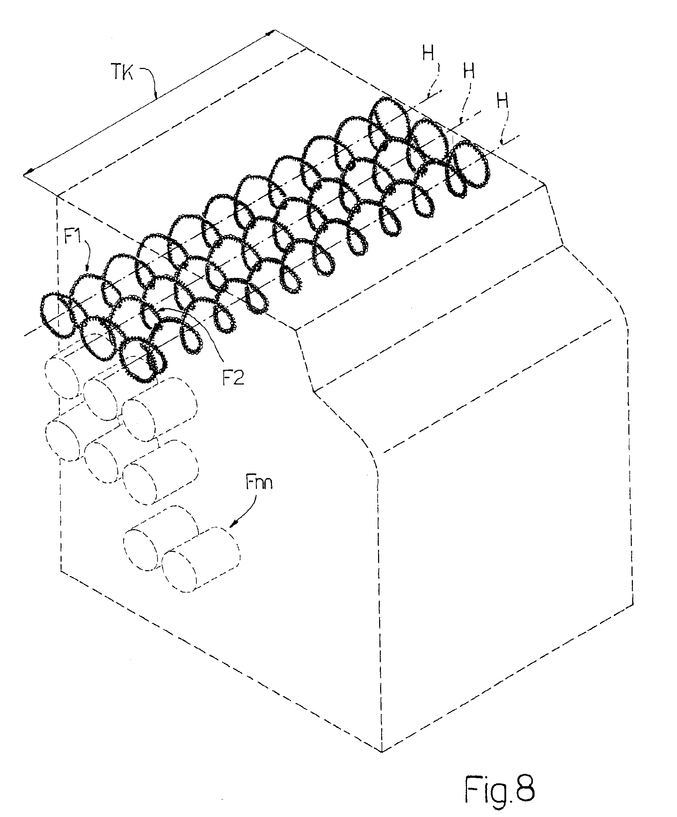

Layered structure 90 may also be isotropic in at least one direction, and comprise (Figure 8) a number of separate threads F1, F2, ..., Fnn; each thread extends along a respective path coiled about a respective axis H; the axes H of the various threads are parallel to one another; each thread is also twisted along the respective path; and the various threads are substantially the same length along respective axes H, so that layered structure 90 is of substantially constant thickness TK.

In actual use, during operation of the fusion reactor, the temperature at catch region ZR is maintained close to 1200°C, second portions 84 are maintained at a temperature of about 200°C by the cooling system, and first portions 80 reach a temperature of just over 200°C.

Structure 90 of threadlike material facing catch region ZR (Figure 7) eliminates heat towards catch region ZR substantially by radiation and is maintained substantially through the whole of thickness TK at a temperature ranging between 500°C and 1200°C.

The deuterium-tritium-helium mixture at the catch region containing the impurities, i.e. carbon atoms and contaminating particles, is aspirated from the catch region towards purifying device 79 through grille portions 60 and 70 and therefore through structure 90 of threadlike material on which the carbon is deposited.

Comprising threadlike material, structure 90 has an extremely extensive active surface on which a large number of carbon atoms is deposited to absorb practically all the carbon from the mixture of deuterium, tritium, helium and impurities.

More specifically, the active surface on which the carbon is deposited comprises the sum of all the elementary surfaces of the tungsten threads, and is therefore much larger than the geometric area supporting layered structure 90.

In connection with the above, it should be pointed out that, by varying the diameter of the tungsten threads (e.g. between 1 μm and 1 mm), the thickness of layered structure 90 (e.g. between 1 mm and 100 mm), and the ratio between the volume occupied by the tungsten threads and the total volume of layered structure 90 (e.g. between 10% and 50%), said geometric area is multiplied by factors ranging from 10 to 10000.

Moreover, on account of the high temperature of structure 90 facing catch region ZR, tritium absorption by the deposited carbon is negligible due to codeposition of tritium also being negligible within said 500-1200°C temperature range.

The present invention therefore provides for preventing tritium absorption by the deposited carbon, and at the same time absorbing a large number of carbon atoms.

Moreover, being substantially deformable and not secured rigidly to grille portions 60 and 70, structure 90 of threadlike material is highly resistant, i.e. is not substantially deformed and does not split, even in the presence of severe heat flow in the reactor, e.g. during transient operating states of the reactor.

## Claims

1. A filtering element for a divertor of a TOKAMAK nuclear fusion reactor, comprising at least one grille structure (60, 70) interposed between a catch region (ZR, 54, 56), for catching contaminating particles from a toroidal channel (33) in which plasma is formed and confined (13, 15, 17), and the input of purifying means (79);
   characterized in that said grille structure (60, 70) is fitted with a layered structure of threadlike material (90) facing said catch region (54, 56) and through which flows a mixture of deuterium, tritium, helium and impurities.

2. A filtering element as claimed in Claim 1, characterized in that said layered structure of threadlike material (90) comprises anisotropic felt.

3. A filtering element as claimed in Claim 1, characterized in that said layered structure of threadlike material (90) comprises a number of separate threads (F1, F2, Fnn); each thread extends along a path coiled about a respective axis (H); the axes (H) of the various threads are substantially parallel to one another; and each thread is twisted along the respective path.

4. A filtering element as claimed in any one of the foregoing Claims, characterized in that said layered structure of threadlike material (90) comprises threads of refractory metal material resistant to high temperatures, in particular tungsten.

5. A filtering element as claimed in any one of the foregoing Claims, characterized in that said layered structure of threadlike material (90) is secured firmly to said grille structure (60, 70).

6. A filtering element as claimed in Claim 5, characterized in that said layered structure of threadlike material (90) is secured to said grille structure (60, 70) by brazing.

7. A filtering element as claimed in any one of the foregoing Claims, characterized in that said layered structure of threadlike material (90) is of substantially constant thickness (TK).

8. A filtering element as claimed in any one of the foregoing Claims, characterized in that said grille structure (60, 70) comprises cooling means (82, 86).

9. A filtering element as claimed in any one of the foregoing Claims, characterized in that said grille structure (60, 70) comprises a flat grille structure.

10. A filtering element as claimed in any one of the foregoing Claims, characterized in that said grille structure (60, 70) is defined by a number of straight lamellar elements (62; 72) parallel to one another and substantially equally spaced to define a number of parallel elongated rectangular slits (64; 74).

11. A filtering element as claimed in any one of the foregoing Claims, characterized by comprising:

    - a first flat grille portion (60) defined by a number of straight lamellar elements (62) parallel to one another and substantially equally spaced to define a number of parallel elongated rectangular slits (64);
    - a base portion (66) extending from a first end (60a) of the first flat grille portion (60); said base portion contacting a bottom portion (44b) of a target element (44) onto which said contaminating particles are directed;
    - a C-shaped elbow portion (68) connected to a second end (60b) of the first flat grille portion (60); and
    - a second flat grille portion (70) defined by a number of straight lamellar elements (72) parallel to one another and substantially equally spaced to define a number of parallel elongated rectangular slits (74); the second flat grille portion (70) having a first end portion (70a) connected to the elbow portion (68), and a second end portion (70b) connected to an end element (76) fitted to an intermediate element (48) of said divertor.

12. A divertor for a TOKAMAK nuclear fusion reactor, comprising:

    - at least one target element (44, 49, 66) for intercepting the path (G) of contaminating particles from a toroidal channel (33) in which plasma is formed and confined (13, 15, 17);
    - at least one grille structure (60, 70) interposed between a catch region (ZR, 54, 56), for catching said contaminating particles, and the input (BS) of purifying means (79); said catch region being at least partly defined by said target element (44, 49, 66);

    characterized in that said grille structure (60, 70) is fitted with a layered structure of threadlike material (90) facing said catch region (54, 56) and through which flows a mixture of deuterium, tritium, helium and impurities.

13. A divertor as claimed in Claim 12, characterized in that said layered structure of threadlike material (90) comprises anisotropic felt.

14. A divertor as claimed in Claim 12, characterized in that said layered structure of threadlike material (90) comprises a number of separate threads (F1, F2, Fnn); each thread extends along a path coiled about a respective axis (H); the axes (H) of the various threads are substantially parallel to one another; and each thread is twisted along the respective path.

15. A divertor as claimed in Claim 12, characterized in that said layered structure of threadlike material (90) comprises threads of refractory metal material resistant to high temperatures, in particular tungsten.

16. A divertor as claimed in any one of Claims 12 to 15, characterized in that said grille structure (60, 70) comprises cooling means (82, 86).

17. A divertor as claimed in any one of Claims 12 to 16, characterized in that said grille structure (60, 70) comprises a flat grille structure.

18. A divertor as claimed in any one of Claims 12 to 17, characterized in that said grille structure (60, 70) is defined by a number of straight lamellar elements (62; 72) parallel to one another and substantially equally spaced to define a number of parallel elongated rectangular slits (64; 74).

19. A divertor as claimed in any one of the foregoing Claims, characterized in that said divertor (36) comprises an annular structure symmetrical about an axis of symmetry (7) of the reactor and defined by a number of adjacent modules (42) located in different consecutive angular positions about said axis of symmetry (7).

20. A divertor as claimed in Claim 19, characterized in that each module defines, singly, at least one target element and at least one grille structure (60, 70).

21. A divertor as claimed in Claim 19 or 20, characterized in that each module (42) comprises:

    - a first target element (44) having a substantially C-shaped cross section;
    - a first filtering element (46) having a substantially L-shaped section, comprising at least one said grille structure (60, 70), and extending between a bottom portion (44b) of said first target element (44) and an intermediate element (48) of the divertor;

- a second target element (49) having a substantially C-shaped cross section and located on the opposite side of said intermediate element (48) of the divertor with respect to the first target element;
- a second filtering element (52) having a substantially L-shaped section, comprising at least one said grille structure (60, 70), and extending between a bottom portion (49b) of said second target element (49) and said intermediate element (48).

22. A divertor as claimed in Claim 21, characterized in that each first and second filtering element (46) comprises:

- a first flat grille portion (60) defined by a number of straight lamellar elements (62) parallel to one another and substantially equally spaced to define a number of parallel elongated rectangular slits (64);
- a base portion (66) extending from a first end (60a) of the first flat grille portion (60); said base portion contacting the bottom portion (44b) of said first target element (44);
- a C-shaped elbow portion (68) connected to a second end (60b) of the first flat grille portion (60); and
- a second flat grille portion (70) defined by a number of straight lamellar elements (72) parallel to one another and substantially equally spaced to define a number of parallel elongated rectangular slits (74); the second flat grille portion (70) having a first end portion (70a) connected to the elbow portion (68), and a second end portion (70b) connected to an end element (76) fitted to the intermediate element (48) of said divertor.

23. A TOKAMAK nuclear fusion reactor comprising:

- a toroidal channel (5, 33) supplied with fuel elements (deuterium, tritium);
- means for generating, magnetically confining (15, 17) and heating (13) a gaseous plasma inside said toroidal channel (33), and for initiating a nuclear fusion reaction of the fuel elements;
- a divertor (36) communicating (40) with said toroidal channel (5, 33) and for purifying the plasma supplied to the divertor (36) itself;

said divertor (36) comprising:

- at least one target element (44, 49, 66) for intercepting the path (G) of contaminating particles from the toroidal channel (33);

- at least one grille structure (60, 70) interposed between a catch region (ZR, 54, 56), for catching said contaminating particles, and the input of purifying means (79); said catch region being at least partly defined by said target element (44, 49, 66);

characterized in that said grille structure (60, 70) is fitted with a layered structure of threadlike material (90) facing said catch region (54, 56) and through which a mixture of deuterium, tritium, helium and impurities flows.

24. A reactor as claimed in Claim 23, characterized in that said layered structure of threadlike material (90) comprises anisotropic felt.

Fig.1

Fig.2

Fig.3

Fig.4

Fig.5

Fig.6

Fig.7

TK

H H H

F1

F2

Fn

Fig.8

**European Patent Office**

# EUROPEAN SEARCH REPORT

Application Number

EP 99 83 0397

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JANESCHITZ G ET AL: "Divertor development for ITER" FUSION ENGINEERING AND DESIGN, vol. 39-40, 1 September 1998 (1998-09-01), page 173-187 XP004142916 ISSN: 0920-3796 * page 175, paragraph 1 - page 179, paragraph 2 * * page 182, right-hand column, last paragraph * | 12,23 | H05H1/12 G21B1/00 |
| A | MENON M M ET AL: "Particle exhaust schemes in the DIII-D advanced divertor configuration" PROCEEDINGS, IEEE THIRTEENTH SYMPOSIUM ON FUSION ENGINEERING (CAT. NO.89CH2820-9), KNOXVILLE, TN, USA, 2-6 OCT. 1989, pages 542-546 vol.1, XP002120775 1990, New York, NY, USA, IEEE, USA * page 542, paragraph 1 - page 543, paragraph 1 * | 12 | |
| A | BROMBERG ET AL.: "In-Torus zirconium-alumnium getter pumping for beam-driven Tokamaks" PROCEEDINGS OF THE 7TH SYMPOSIUM ON ENGINEERING PROBLEMS OF FUSION RESEARCH, 25 - 28 October 1977, pages 971-975, XP002120776 Knoxville, Tennessee, USA * page 971, paragraph 1 - page 973, left-hand column, paragraph 2 * | 1 | TECHNICAL FIELDS SEARCHED (Int.Cl.7) H05H G21B |

-/--

The present search report has been drawn up for all claims

| Place of search | Date of completion of the search | Examiner |
|---|---|---|
| THE HAGUE | 17 November 1999 | Capostagno, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 99 83 0397

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN<br>vol. 1998, no. 01,<br>30 January 1998 (1998-01-30)<br>& JP 09 225227 A (NIPPON FELT KOGYO KK),<br>2 September 1997 (1997-09-02)<br>* abstract *<br>--- | 2,13,24 | |
| A | EP 0 280 940 A (EURATOM)<br>7 September 1988 (1988-09-07)<br>----- | | |

TECHNICAL FIELDS
SEARCHED        (Int.Cl.7)

The present search report has been drawn up for all claims

| Place of search | Date of completion of the search | Examiner |
|---|---|---|
| THE HAGUE | 17 November 1999 | Capostagno, E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
 
& : member of the same patent family, corresponding
     document

EPO FORM 1503 03.82 (P04C01)

**ANNEX TO THE EUROPEAN SEARCH REPORT
ON EUROPEAN PATENT APPLICATION NO.**                EP 99 83 0397

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-1999

| Patent document cited in search report | | Publication date | Patent family member(s) | | Publication date |
|---|---|---|---|---|---|
| JP 09225227 | A | 02-09-1997 | NONE | | |
| EP 0280940 | A | 07-09-1988 | LU | 86778 A | 02-03-1988 |
| | | | DK | 73388 A | 17-08-1988 |
| | | | GR | 3002170 T | 30-12-1992 |
| | | | PT | 86769 A,B | 28-02-1989 |

EPO FORM P0459

For more details about this annex : see Official Journal of the European Patent Office, No. 12/82